# NEUE EUROPÄISCHE PATENTSCHRIFT

(11) **EP 2 485 881 B2**
(45) Veröffentlichungstag und Bekanntmachung des Hinweises auf die Entscheidung über den Einspruch: **27.12.2023**
(45) Hinweis auf die Patenterteilung: 11.12.2013
(21) Anmeldenummer: 10773240.6
(22) Anmeldetag: 05.10.2010
(51) Int. Cl.: B29C 45/76

(54) **VERFAHREN ZUR REGELUNG DER HERSTELLUNG EINES PRODUKTES**
METHOD FOR CONTROLLING THE PRODUCTION OF A PRODUCT
PROCÉDÉ POUR RÉGULER LA FABRICATION D'UN PRODUIT

(30) Priorität: 05.10.2009 DE 102009048196; 22.12.2009 DE 102009060665
(43) Veröffentlichungstag der Anmeldung: 15.08.2012
(73) Patentinhaber: Priamus System Technologies AG, 8200 Schaffhausen (CH)
(72) Erfinder: BADER, Christopherus, CH-8413 Neftenbach (CH)
(74) Vertreter: Rentsch Partner AG
(86) Internationale Anmeldenummer: PCT/EP2010/006064
(87) Internationale Veröffentlichungsnummer: WO 2011/042153

(56) Entgegenhaltungen:
- EP-B1- 0 897 786
- WO-A1-2009/040077
- CH-A5- 685 613
- DE-A1-102005 036 198
- JP-A- 10 044 205
- JP-A- 2001 277 323
- JP-A- 2002 137 274
- JP-A- 2003 271 678
- US-A- 5 427 516
- US-A- 5 835 379
- US-B1- 6 816 820
- DATABASE WPI Week 199514 Thomson Scientific, London, GB; AN 1995-101466 XP002618675, -& JP 7 024893 A (FANUC LTD) 27. Januar 1995 (1995-01-27)
- KAZMER D: "THE FOUNDATIONS OF INTELLIGENT PROCESS CONTROL FOR INJECTION MOLDING", JOURNAL OF INJECTION MOLDING TECHNOLOGY, SOCIETY OF PLASTICS ENGINEERS, BROOKFIELD, CT, US, Bd. 1, Nr. 1, 1. März 1997 (1997-03-01), Seite 44/45, XP000740778, ISSN: 1533-905X
- Spritzgiesstechnik Siegfried Stitz u.a. 2004.
- Priamus "Wissen wie's läuft?, Sonderdruck aus Plastverarbeiter 10.2008

## Beschreibung

Die Erfindung betrifft ein Verfahren zur Regelung der Herstellung eines Produktes in einer Form, in die eine plastische Masse eingegeben wird, die einer Schergeschwindigkeit und/oder einer Schubspannung unterliegt.

### Stand der Technik

Nur beispielhaft wird bei dem vorliegenden erfindungsgemässen Verfahren auf die Herstellung eines Produktes in einem Spritzgiesswerkzeug hingewiesen. Für viele der heute produzierten Spritzgiesswerkzeuge wird bereits vor der eigentlichen Herstellung eine so genannte Füllbildsimulation auf der Basis der Finite-Elemente-Methode durchgeführt. Auf diese Weise werden bereits in der Planungsphase die theoretisch optimalen Prozessbedingungen in Form von Schergeschwindigkeiten, Schubspannungen und Drücken in der Werkzeugkavität vorgegeben. Problematisch hierbei ist die Tatsache, dass der Maschineneinsteller nicht weiss, welcher Einstellung an der Maschine dies entspricht.

In der W2009/040077 wird ein Verfahren zum Überwachten, Dokumentieren und/oder Regeln einer Spritzgiessmaschine mit einem Spritzgiesswerkzeug, in das eine Schmelze eingeführt wird, beschrieben, wobei eine Viskosität der Schmelze in dem Spritzgiesswerkzeug direkt durch die jeweiligen Quotienten aus Schubspannung und Schergeschwindigkeit anhand von Druckdifferenzen, der Geometrie der Kavität und der Fliessgeschwindigkeit der Schmelze ermittelt wird. Dabei wird die Viskosität durch mindestens einen Werkzeuginnendruck-Sensor und/oder mindestens einen Werkzeugwandtemperatur-Sensor ermittelt, indem automatisch erkannt wird, wenn die Schmelze die jeweilige Sensorposition erreicht. Über die so ermittelte Zeitdifferenz, welche die Schmelze benötigt, um von einem Sensor zum nächsten zu fliessen, wird automatisch die Schergeschwindigkeit ermittelt. Über die automatisch ermittelte Druckdifferenz in diesem Zeitraum vom Erreichen der Schmelze des ersten bis zum Erreichen des zweiten Sensors wird schliesslich die Schubspannung ermittelt.

Bei diesem Verfahren werden automatisch und in Echtzeit die Anstiege eines Drucksignals und eines Temperatursignals ermittelt und zur Bestimmung von Schergeschwindigkeit und Schubspannung herangezogen.

In DATABASE WPI Week 1995 14 Thomson Scientific, London, GB; AN 1995-101466-& JP7024893A (FANUC LTD) 27.01.1995 (1995-01-27) wird die Herstellung eines Spritzgussteils beschrieben. Die Zeit, in welcher die Fliessfront der Schmelze eine beliebig gewählte Position in der Form erreicht, und die Schubspannung der Fliessfront, gemessen in dieser Position, werden zusammen mit Positionsinformationen dieser beliebigen Position gespeichert. Die gespeicherten Informationen werden berechnet und verarbeitet und das Ergebnis dargestellt.

In der JP 10044205 A wird ebenfalls eine Analysemethode eines Spritzgiessflusses beschrieben. Es dient dazu, die Schergeschwindigkeit einer Schmelze an einem beliebigen Ort in der Form zu schätzen und unabhängig davon die Beziehung zwischen der Schergeschwindigkeit der leitfähigen Schmelze und des Oberflächenwiderstands eines Formteils zu bestimmen. Eine funktionale Formel von beidem dieser Parameter wird abgeleitet, um zur Berechnung des Oberflächenwiderstands an dieser frei gewählten Position des Formteils von der geschätzten Schergeschwindigkeit zu verwenden, so dass der berechnete Oberflächenwiderstand einen gewünschten Wert bekommt und die geschätzte Schergeschwindigkeit durch eine Änderung der Spritzgiessbedingung oder der Form der Kavität reguliert wird.

Auch aus Kazmer D: "The Foundations of intelligent process control for injection molding" Journal of injection molding technology, society of plastics engineers, Brookfield, CT, US, Bd. 1, Nr. 1. 1. März 1997 (1997-03-01), Seite 44/45, XP000740778 ISSN: 1533-905X, Seite 45, Spalte 1, Absatz 2, ist eine sehr intelligente Verfahrenssteuerung von Spritzgiessmaschinen bekannt. Dabei wird ein Zweistufenverfahren vorgeschlagen. Die erste Stufe besteht aus einer Prozessverbesserung, in welcher akzeptable Prozessabläufe und eine Qualität des geformten Teils erreicht wird. Die zweite Stufe besteht aus einer fortlaufenden Qualitätsüberwachung und Kontrolle während der Produktion.

Aus der US 5 835 379 A ist ein Verfahren zur Prozessanalyse eines Spritzgiessprozesses bekannt, bei dem u.a. der Zustand der geformten Gegenstände anhand der Scherraten und der Schubspannungen ermittelt wird. Werden Fehler festgestellt, so werden verschiedene Korrekturverfahren vorgeschlagen, nämlich eine Änderung der Formkonfiguration, eine Änderung der Form des spritzgiessgeformten Produktes durch Modifizierung des Materialflusskanals, eine Änderung von Spritzgiessbedingungen, wie Einspritzgeschwindigkeit, Materialtemperatur oder Formtemperatur und ein Wechsel des Materials, welches spritzgiessgeformt wird.

### Aufgabe

Aufgabe der vorliegenden Erfindung ist eine Verbesserung des oben beschriebenen Verfahrens in Bezug auf Prozessüberwachung und Prozessregelung.

### Lösung der Aufgabe

Zur Lösung der Aufgabe führt, dass
- die Schergeschwindigkeit und/oder die Schubspannung so lange verändert wird/werden, bis das Produkt seine gewünschte Qualität, wie insbesondere Oberflächengüte, Dimension, Festigkeit od.dgl., erreicht
- die Schergeschwindigkeit und/oder Schubspannung für das Produkt mit gewünschter Qualität bestimmt wird,
   wobei die Schergeschwindigkeit und/oder die Schubspannung mit Hilfe von Druck - und/oder Temperatursensoren ermittelt wird/werden,
- die Schergeschwindigkeit und/oder Schubspannung nach Erreichen der gewünschten Qualität konstant gehalten wird/werden und Positionen von Druck- und Temperatursensoren in die Bestimmung einbezogen werden, um optimierte Werte einer Schergeschwindigkeit und/oder Schubspannung automatisch zwischen den entsprechenden Sensorpositionen zu ermitteln und in einer Datenbank abzuspeichern.

Während bei dem im Stand der Technik beschriebenen Verfahren in der Regel versucht wird, den Prozess konstant zu halten bzw. bei Mehrfachwerkzeugen zu vergleichmässigen, besteht gemäss der vorliegenden Erfindung der Wunsch, die Qualität eines Spritzteils durch entsprechende Massnahmen gezielt auf einen bestimmten Wert zu regeln. Erst in einem zweiten Schritt wird eine Konstanthaltung der Regelung und eine entsprechende Überwachung angestrebt.

Unter der Qualität eines Spritzteils ist jeder beeinflussbare Parameter zu verstehen. Dazu gehören sichtbare Parameter, wie beispielsweise die Oberflächengüte, Rauhigkeit, Ausgestaltung der Kantenbereiche, Dimensionen od.dgl.. Es gehören aber auch Parameter dazu, die nur durch Prüfmassnahmen erfasst werden können. Hierzu gehört die innere Struktur, Festigkeit, Steifigkeit usw. des Spritzteils. Auch diese Aufzählungen sind jedoch nicht abschliessend. Im Rahmen der vorliegenden Erfindung liegt jede beliebige Qualität eines Spritzteils.

Des Weiteren kann das erfindungsgemässe Verfahren vor allem auch zur Regelung des maximalen Werkzeuginnendrucks verwendet werden, indem die der Maschinensteuerung vorgegebenen Nachdruck-Sollwerte automatisch angepasst werden. Beispielsweise wird in der EP 1 377 427 B1 ein Verfahren zum Regeln der Schwindung von Spritzteilen in einer Kavität in einem Werkzeug einer Spritzgiessmaschine nach Beendigung des Füllvorgangs dieser Kavität mit einer Schmelze beschrieben, wobei die Temperatur und ein Innendruck in der Kavität überwacht und die Temperatur des Werkzeugs geregelt wird. Dabei wird durch Temperierung des Werkzeugs am Ende der Füllphase bzw. von einem Druckmaximum in der Kavität bis zum Ende des Spritzzyklus die Temperatur und der Innendruck in der Kavität bis zum Ende des Spritzgusszyklus an einen Referenzlauf angeglichen. Damit wird der Atmosphärendruck immer bei gleicher Werkzeugtemperatur erreicht.

Bezogen auf das eben beschriebene Verfahren nach der EP 1 377 427 B1 wird das in der vorliegenden Erfindung beanspruchte Verfahren bevorzugt natürlich auch bei der Regelung der Temperaturen, aber auch bei der Verwendung in Kombination der Regelung des Werkzeuginnendrucks und der Temperaturen angewendet. Als Temperaturregelungen kommen vor allem die Regelungen der Werkzeugwandtemperatur und der Schmelzetemperaturen in Betracht. Dazu gehört natürlich auch eine Regelung der Temperatur der Schmelze im Heisskanal und/oder bei der Schmelzeaufbereitung.

In der EP 1 372 934 B1 ist eine Vergleichmässigung der Temperatur in allen Kavitäten eines Mehrfachspritzgiesswerkzeuges bzw. Mehrkavitätenwerkzeuges beschrieben. Auch hier kann natürlich das vorliegende erfindungsgemässe Verfahren sehr gut angewendet werden.

Ähnliches gilt auch für ein Verfahren nach der EP 1 761 375 B1, bei dem Schmelze aus einer Mehrzahl von Anschnitten in die Kavität eingeführt wird, wobei eine Mehrzahl von Sensoren zur Überwachung des Schmelzestroms in der Kavität vorgesehen sind. Anhand der Signale der Sensoren wird ein kontinuierlicher Einfüllvorgang durch Düsen anhand der Zeitdifferenz der Signale der Sensoren einer nach dem anderen automatisch aufeinander abgestimmt. Dabei ermittelt der Sensor eine Werkzeugwandtemperatur, Schmelzetemperatur, einen Druck und/oder das Material der Schmelze.

Allgemein kann das erfindungsgemässe Verfahren vor allem auch bei der Regelung der Kühlzeit oder im Zusammenhang mit einer automatischen Heisskanalbalancierung verwendet werden. Hier ist der Erfindung keine Grenze gesetzt.

Im Rahmen der Erfindung soll auch liegen, die Positionen von Druck- und Temperatursensoren in die Bestimmung einzubeziehen, um optimierte Werte automatisch zwischen den entsprechenden Sensorpositionen zu ermitteln und in einer Datenbank abzuspeichern.

Mit der vorliegenden erfindungsgemässen Regelung ist es möglich, praktisch per Knopfdruck direkt die optimierten Qualitätsparameter einzustellen. Hierdurch werden die Herstellungsprozesse wesentlich vereinfacht, da ein gewünschter Qualitätsparameter, wie z.B. eine bestimmte Oberflächengüte, sehr einfach und ohne aufwändige Versuche erzielt werden kann.

### Beispiel:

Je nach Maschineneinstellung und Geometrien der Werkzeugkavität und des Einspritzaggregats ergeben sich bestimmte Werte für die Schergeschwindigkeit, die Schubspannung und die Viskosität für ein bestimmtes Spritzteil (beispielsweise eine Schergeschwindigkeit von 150 1/s). Aufgrund einer Versuchsreihe (z.B. mit einem "Design of Experiments") wird die Einstellung der Spritzgiessmaschine optimiert und das Verarbeitungsfenster für ein entsprechendes Spritzteil festgelegt. Als Ergebnis stellt sich heraus, dass die Kunststoffschmelze mindestens mit einer Schergeschwindigkeit von 300 1/s zu beanspruchen ist, um eine entsprechende Oberflächengüte zu erreichen. In diesem Fall muss beispielsweise die Einspritzgeschwindigkeit der Maschine entsprechend erhöht werden, um das Material stärker zu scheren und den gewünschten Effekt zu erzielen. Die neu einzustellenden Werte der Einspritzgeschwindigkeit können berechnet und entweder manuell oder automatisch der Maschinensteuerung mitgeteilt werden.

Ein weiteres Problem ist die Tatsache, dass Produktionswerkzeuge oft nicht nur auf unterschiedlichen Maschinen, sondern an verschiedenen Standorten für die Herstellung von Spritzteilen verwendet werden. Selbst auch bei Maschinen der gleichen Baureihe und Grösse werden bei gleicher Maschineneinstellung in der Regel unterschiedliche Prozessbedingungen - und somit unterschiedliche Teile - produziert. Bei unterschiedlichen Maschinen (Fabrikat, Grösse, etc.) ist es praktisch auszuschliessen, dass exakt die gleichen Prozessbedingungen erzielt werden.

Durch die erfindungsgemässe Regelung der Schergeschwindigkeit und/oder der Schubspannung wäre es möglich, ausgehend von einer bestimmten Grundeinstellung völlig unabhängig von der Maschine bzw. der Maschineneinstellung die gleichen Qualitätsparameter zu erreichen. Dabei soll ergänzend betont werden, dass vor allem eine Kombination der Regelung des Fliessverhaltens über die Schergeschwindigkeit und die Schubspannung und eine Verdichtung über den Werkzeuginnendruck erfolgt. Beide Regelungen ergänzen sich ausgezeichnet.

### Beispiel:

Ventile eines bestimmten Herstellers werden weltweit in verschiedenen Baureihen an verschiedenen Standorten gefertigt. Die Endprodukte der jeweils selben Baureihe sollten hierbei möglichst identisch sein, unabhängig vom Produktionsstandort und den entsprechenden Produktionsbedingungen.

Über eine konzernweite Vorgabe eines Schergeschwindigkeitswertes (z.B. 350 1/s) und eines Schubspannungswertes (z.B. 20'000 Pa) könnte dieses Kriterium unabhängig von Bedienpersonal und Maschinenpark erreicht werden. Voraussetzung wäre, dass diese Parameter im Werkzeug ermittelt und geregelt werden.

Um die Schergeschwindigkeit und/oder Schubspannung zu verändern bzw. zu beeinflussen, sind verschiedene Massnahmen möglich, von denen nur beispielsweise aufgezählt wird:
- Änderung der Einspritzgeschwindigkeit der Spritzgiessmaschine
- Veränderbare/einstellbare Anschnittsquerschnitte
- Veränderbare/einstellbare Verschlussdüsen-Querschnitte (steuerbare Verschlussnadeln)
- Änderung der Schneckendrehzahl beim Plastifizieren
- Änderung des Staudrucks beim Plastifizieren
- Schmelzetemperaturregelung generell
- Werkzeugoberflächentemperaturregelung generell.

## Patentansprüche

1. Verfahren zur Regelung der Herstellung eines Produktes in einer Form, in die eine plastische Masse eingegeben wird, die einer Schergeschwindigkeit und/oder einer Schubspannung unterliegt,
wobei die Schergeschwindigkeit und/oder die Schubspannung so lange verändert wird/werden, bis das Produkt seine gewünschte Qualität, wie insbesondere Oberflächengüte, Dimension, Festigkeit od.dgl., erreicht,
die Schergeschwindigkeit und/oder Schubspannung für das Produkt mit gewünschter Qualität bestimmt wird,
wobei die Schergeschwindigkeit und/oder die Schubspannung mit Hilfe von Druck- und/oder Temperatursensoren ermittelt wird/werden,
die Schergeschwindigkeit und/oder Schubspannung nach Erreichen der gewünschten Qualität konstant gehalten wird/werden
und Positionen von Druck- und Temperatursensoren in die Bestimmung einbezogen werden,
um optimierte Werte einer Schergeschwindigkeit und/oder Schubspannung automatisch zwischen den entsprechenden Sensorpositionen zu ermitteln
und in einer Datenbank abzuspeichern.

2. Verfahren nach Anspruch 1, **dadurch gekennzeichnet, dass** optimierte Werte zwischen einzelnen Sensorpositionen ermittelt werden.

3. Verfahren nach wenigstens einem der Ansprüche 1 oder 2, **dadurch gekennzeichnet, dass** die Schergeschwindigkeit und/oder die Schubspannung insbesondere in einer Spritzgiessmaschine durch die Veränderung
- einer Einspritzgeschwindigkeit,
- eines einstellbaren Anschnittquerschnitts,
- eines einstellbaren Verschlussdüsen-Querschnitts,
- eine Schneckendrehzahl beim Plastifizieren,
- eines Staudrucks,
- einer generellen Schmelzetemperatur und/oder
- einer generellen Werkzeugoberflächentemperatur

4. Verwendung eines Verfahrens nach wenigstens einem der Ansprüche 1 bis 3 zur Regelung eines Spritzgussvorgangs in einer Spritzgiessmaschine.

5. Verwendung eines Verfahrens nach Anspruch 4 in Kombination mit einer Regelung eines Werkzeuginnendrucks und/oder von Temperaturen, insbesondere der Werkzeugwandtemperatur und/oder der Schmelzetemperaturen.

6. Verwendung eines Verfahrens nach Anspruch 4 oder 5 zur Regelung der Kühlzeit eines Werkzeugs und/oder zur Heisskanalbalancierung.

7. Verwendung eines Verfahrens nach wenigstens einem der Ansprüche 1 bis 3 bereits bei der Simulation eines Herstellungsvorganges eines Produktes, insbesondere eines Spritzgiessvorganges.

## Claims

1. Method for regulating the production of a product in a mould, into which a plastic compound subjected to a shear rate and/or a shear stress is introduced, wherein
the shear rate and/or the shear stress is/are changed until the product reaches its desired quality, such as in particular surface quality, dimension, strength or the like,
the shear rate and/or shear stress for the product with the desired quality is determined,
wherein the shear rate and/or the shear stress is/are ascertained by means of pressure sensors and/or temperature sensors,
the shear rate and/or shear stress after reaching the desired quality is/are constant
and positions of pressure sensors and temperature sensors are included in the determination,
in order to ascertain optimised values of a shear rate and/or shear stress automatically between the corresponding sensor positions
and to store them in a database.

2. Method according to claim 1, **characterised in that** optimised values between individual sensor positions are ascertained.

3. Method according to at least one of claims 1 or 2, **characterised in that** the shear rate and/or the shear stress in particular in an injection-moulding machine is regulated by changing
- an injection rate,
- an adjustable gate cross-section,
- an adjustable shut-off nozzle cross-section,
- a screw rotational speed during plasticising,
- a back-pressure,
- a general molten material temperature and/or
- a general mould surface temperature.

4. Use of a method according to at least one of claims 1 to 3 for regulating an injection-moulding process in an injection moulding machine.

5. Use of a method according to claim 4 in combination with a regulation of a mould internal pressure and/or of temperatures, in particular the mould wall temperature and/or the molten material temperatures.

6. Use of a method according to claim 4 or 5 for regulating the cooling time of a mould and/or for hot runner balancing.

7. Use of a method according to at least one of claims 1 to 3 already during the simulation of a process for production of a product, in particular an injection-moulding process.

## Revendications

1. Procédé pour réguler la fabrication d'un produit dans un moule dans lequel est introduite une masse plastique qui est soumise à une vitesse de cisaillement et/ou une contrainte de cisaillement,
la vitesse de cisaillement et/ou la contrainte de cisaillement étant modifie(s) jusqu'à ce que le produit atteigne sa qualité désirée, telle qu'en particulier la qualité de surface, la dimension, la solidité ou autre,
la vitesse de cisaillement et/ou la contrainte de cisaillement étant déterminée(s) pour le produit à qualité désirée,
la vitesse de cisaillement et/ou la contrainte de cisaillement étant déterminée(s) à l'aide de capteurs de pression et/ou de température,
dans lequel la vitesse de cisaillement et/ou la contrainte de cisaillement est ou sont maintenue(s) constant(s) après avoir attaint la qualité désirée
et il est tenu compte des positions des capteurs de pression et de température dans la détermination,
pour déterminer automatiquement les valeurs optimisées d'une vitesse de cisaillement et/ou d'une contrainte de cisaillement entre les positions de capteur correspondantes
et les mémoriser dans une banque de données.

2. Procédé selon la revendication 1, **caractérisé par le fait que** les valeurs optimisées sont déterminées entre des positions de capteur individuelles.

3. Procédé selon au moins l'une des revendications 1 ou 2, **caractérisé par le fait que** la vitesse de cisaillement et/ou la contrainte de cisaillement est régléö en particulier dans une machine de moulage par injection par modification
- d'une vitesse d'injection,
- d'une section d'attaque réglable,
- d'une section de tuyère d'obturation réglable,
- d'un nombre de tours de vis sans fin lors de la plastification,
- d'une pression d'accumulation,
- d'une température de fusion générale et/ou
- d'une température de surface de moule générale,

4. Utilisation d'un procédé selon au moins l'une des revendications 1 à 3 pour réguler une opération de moulage par injection dans une machine à mouler par injection.

5. Utilisation d'un procédé selon la revendication 4 en combinaison avec une régulation d'une pression interne de moule et/ou de températures, en particulier de la température de paroi du moule et/ou des températures de fusion.

6. Utilisation d'un procédé selon la revendication 4 ou 5 pour réguler le temps de refroidissement d'un moule et/ou pour l'équilibrage de canal de chauffage.

7. Utilisation d'un procédé selon au moins l'une des revendications 1 à 3, déjà lors de la simulation d'une opération de fabrication d'un produit, en particulier d'une opération de moulage par injection.
